# EUROPÄISCHE PATENTSCHRIFT

(11) **EP 4 296 647 B1**
(45) Veröffentlichungstag und Bekanntmachung des Hinweises auf die Patenterteilung: **05.08.2026**
(21) Anmeldenummer: 22180502.1
(22) Anmeldetag: 22.06.2022
(51) Int. Cl.: G01N 17/00, E02D 31/02, E02D 33/00

(54) **VERFAHREN ZUR SIMULATION REALER EINBAUBEDINGUNGEN VON ERDBERÜHRTEN UND/ODER DURCH DRÜCKENDES WASSER UND AUFSTAUENDES SICKERWASSER BELASTETEN GEBÄUDEBAUTEILEN**
METHOD FOR SIMULATING REAL-WORLD INSTALLATION CONDITIONS OF BUILDING COMPONENTS IN CONTACT WITH THE GROUND AND/OR EXPOSED TO WATER UNDER PRESSURE AND SEEPAGE WATER
PROCÉDÉ DE SIMULATION DES CONDITIONS RÉELLES DE MONTAGE DES PARTIES DE BÂTIMENT POSÉES SUR LE SOL ET/OU SOUS CONTRAINTES DE L'EAU SOUS PRESSION ET DES EAUX D'INFILTRATION DE LA DÉCHARGE ACCUMULÉES

(43) Veröffentlichungstag der Anmeldung: 27.12.2023
(73) Patentinhaber: BASF SE, 67056 Ludwigshafen am Rhein (DE)
(72) Erfinder: Von Auenmueller, Jürgen, 67056 Ludwigshafen am Rhein (DE); Kaiser, Eduard, 67056 Ludwigshafen am Rhein (DE); Treml, Sebastian, 82166 Gräfelfing (DE); Sprengard, Christoph, 82166 Gräfelfing (DE)
(74) Vertreter: BASF IP Association

(56) Entgegenhaltungen:
- CAI SHANSHAN ET AL: "Moisture behavior of polystyrene insulation in below-grade application", ENERGY, ELSEVIER, AMSTERDAM, NL, vol. 159, 29 October 2017 (2017-10-29), pages 24 - 38, XP085312521, ISSN: 0378-7788, DOI: 10.1016/J.ENBUILD.2017.10.067
- LI YOUYUN ET AL: "Thermal Conductivity Characteristics of Thermal Insulation Materials Immersed in Water for Cold-Region Tunnels", ADVANCES IN MATERIALS SCIENCE AND ENGINEERING, vol. 2020, 9 April 2020 (2020-04-09), US, pages 1 - 15, XP055978514, ISSN: 1687-8434, DOI: 10.1155/2020/9345615
- ANONYMOUS: "Rainwater Cisterns: Design, Construction, and Water Treatment", 2017, XP093320485, Retrieved from the Internet <URL:https://saveballona.org/system/files/PENN%20STATE%20CISTERN%20PUBLICATION%20SC277-2.pdf> [retrieved on 20250930]
- JOECHO-16: "Betonsarg auf dem Boden. - Stockfoto", 11 July 2016 (2016-07-11), XP093320358, Retrieved from the Internet <URL:https://www.istockphoto.com/de/foto/betonsarg-auf-dem-boden-gm541117812-96739001> [retrieved on 20250930]
- LU JIE ET AL: "Solar seasonal thermal energy storage for space heating in residential buildings: Optimization and comparison with an air-source heat pump", ENERGY SOURCES, PART B: ECONOMICS, PLANNING, AND POLICY, vol. 15, no. 5, 3 May 2020 (2020-05-03), pages 279 - 296, XP093320617, ISSN: 1556-7249, DOI: 10.1080/15567249.2020.1786192

## Beschreibung

Die vorliegende Erfindung bezieht sich auf ein Verfahren zur Simulation realer Einbaubedingungen von erdberührten und/oder durch drückendes Wasser und aufstauendes Sickerwasser belasteten Gebäudebauteilen für die Untersuchung der Einflüsse auf Dämmstoffe durch die umweltbedingten Belastungen, wie diese im drückenden und lang anstauenden Sickerwasser auftreten können.

Es besteht ein Problem darin, dass für Dämmstoffe in der Anwendung im drückenden Grundwasser Nachweise erbracht werden müssen, wie sich Dämmstoffe unter dem Einfluss realer Umweltbedingungen mit der Zeit ändern. Diese Nachweise erfolgen bisher dadurch, dass an realen Gebäudeobjekten nach einer festgelegten Anwendungsdauer von mindestens drei Jahren Dämmstoffplatten entnommen und deren Eigenschaften im Vergleich zu den Eigenschaften vor dem Einbau untersucht werden.

Bei dieser Vorgehensweise wird aufgrund des Bodengutachtens von Belastungen der Platten durch drückendes und lang anhaltendes Grundwasser ausgegangen. Diese Bedingungen werden jedoch in der Folgezeit weder garantiert noch dokumentiert. Bereits das Auffinden von Objekten, in denen die geforderte Belastung mit einem andauernden Wasserdruck von 3,5 m Eintauchtiefe mutmaßlich auftreten, stellt eine bedeutende Hürde dar. Bei Dämmstoffen, die horizontal verbaut sind, beispielsweise unter der Bodenplatte eines Gebäudes, ist eine solche Vorgehensweise dagegen nahezu ausgeschlossen.

Aufgrund der Änderungen der Dämmstoffeigenschaften nach dieser Einbauzeit wird pauschal auf die Änderungen in jeglicher Einbausituation geschlossen. Wenn während der Einbauzeit deutlich weniger Wasser als erwartet an dem Gebäude ansteht, wird sich der Dämmstoff weniger stark verändern, als wenn andauernd Wasser bis zur erlaubten Eintauchtiefe ansteht. Eine Vergleichbarkeit von Werten verschiedener Bauprodukte, welche an verschiedenen Objekten entnommen werden, ist daher nicht gegeben. Eine Korrelation von Umweltbedingungen mit den sich potenziell ergebenden Änderungen der Eigenschaften der Platten kann mangels Dokumentation der auftretenden Belastung nicht erstellt werden.

Am Ende der Versuchsdauer werden Platten von dem Objekt entnommen, indem der Keller des Objektes wieder teilweise freigelegt wird. Eine Entnahme von Proben ist dort nur vereinzelt möglich. Zudem können die Platten bei der Entnahme erheblich beschädigt werden. Eine Erstellung von Messreihen ist ebenfalls nicht möglich.

Zur Schaffung realer, geeigneter, nachvollziehbarer, dokumentierbarer und in einem weiten Bereich beliebig einstellbarer Umweltbedingungen besteht der Bedarf an einem Versuchsaufbau, bei dem die erforderlichen Bedingungen eingestellt und zuverlässig aufrechterhalten werden können. Die Entnahme der Platten aus diesem Versuchsaufbau soll sowohl während der Versuchsdauer als auch an dessen Ende problemlos jederzeit möglich sein. Ebenso sollen Messreihen mit einer Reihe von Parametern realisiert werden können.

Der Artikel CAI SHANSHAN et al.: "Moisture behavior of polystyrene insulation in below-grade application", ENERGY, Bd. 159, 29. Oktober 2017 (2017-10-29), Seiten 24-38, XP085312521, DOI: 10.1016/J.ENBUILD.2017.10.067 offenbart ein Verfahren zum Testen von Dämmmaterial unter Verwendung eines mit Erdboden gefüllten Behälters, der mit Wasser beaufschlagt werden kann.

Der vorliegenden Erfindung liegt daher die Aufgabe zugrunde, eine neuartige Simulation realer Einbaubedingungen von erdberührten und/oder durch drückendes Wasser und aufstauendes Sickerwasser belasteten Gebäudebauteilen bereitzustellen und ein entsprechendes Verfahren anzugeben. Insbesondere soll erstmals die Möglichkeit geschaffen werden, horizontal verbaute Dämmstoffe zu evaluieren.

Diese Aufgabe wird gelöst durch ein Verfahren nach Anspruch 1.

Mit "Gebäudebauteilen" werden tragende Teile eines Gebäudes bezeichnet, insbesondere Außenwände, Sockel und Kellerwände, aber auch die Bodenplatte Der Begriff "erstes Ende" bezeichnet im Sinne der vorliegenden Erfindung das untere Ende der Prüfkammer (11).

Unter "erdberührt" wird im Sinne der vorliegenden Erfindung der Perimeterbereich verstanden, d.h. die mit Erde in Berührung stehende Bauteilfläche bis zur Oberkante des Erdreichs. Als Erdreich wird dabei nicht nur Erde im klassischen Sinne verstanden, sondern das umgebende Substrat aus Erde, Sand, Schotter und dergleichen sowie Mischungen und Schüttungen davon. Als Substrat für die Verfüllung der Prüfkammer (11) kann gewaschener Kies mit einer Sieblinie (16/32) verwendet werden. Die EB22-0435EP

Verwendung von gewaschenem Kies soll eine Verfrachtung von Feinanteil und ggf. Probleme durch verstopfte Abflüsse vermeiden.

Der Begriff "drückendes Wasser" bzw. "aufstauendes Sickerwasser" ist bisher nur ungenau definiert. Im Sinne der Erfindung ergibt sich die Notwendigkeit einer neuen Definition dieses Begriffes mit weiterer Differenzierung.

Bei einer bestimmten vorgegebenen Eintauchtiefe wird stets nur der unterste Abschluss der Dämmplatten einer Dämmstoffschicht (3) dem vollen Wasserdruck ausgesetzt. Im Mittel über der mit drückendem Wasser belasteten Höhe der Dämmstoffschicht (3) ergibt sich eine Belastung die der halben Eintauchtiefe entspricht. Liegen zyklisch veränderliche Grundwasserstände vor, wird die im Mittel vorliegende Belastung der Dämmstoffschicht (3) mit Wasserdruck weiter reduziert. Das im Weiteren vorgeschlagene Nachweisverfahren berücksichtigt diese Zusammenhänge. Für die Darstellung des Prüfablaufs werden deshalb die folgenden Begriffsdefinitionen eingeführt:

### Maximale Eintauchtiefe (ETₘₐₓ)

Entspricht der Eintauchtiefe des untersten Endes der untersten Platte einer Dämmstoffschicht (3) im Falle der maximal zulässigen Eintauchtiefe der Dämmstoffschicht (3) gemäß Zulassung.

### Reale Eintauchtiefe (ETᵣₑₐₗ)

Entspricht der Eintauchtiefe des untersten Endes der untersten Platte einer Dämmstoffschicht (3) entsprechend einem in der Praxis real vorliegenden Grundwasserpegels. Im Falle eines schwankenden Grundwasserpegels ist ETᵣₑₐₗ zeitlich veränderlich.

### Mittlere Eintauchtiefe (ETₘₑₐₙ)

Entspricht der über die Höhe der eingetauchten Dämmstoffschicht (3) gemittelten Eintauchtiefe. Dies entspricht der halben Eintauchtiefe bezogen auf die gesamte Fläche (0.5 x ETₘₐₓ bzw. 0.5 x ETᵣₑₐₗ). Im Falle eines real schwankenden Grundwasserpegels ist ETₘₑₐₙ zeitlich veränderlich.

### Mittlere effektive Eintauchtiefe (ET_{eff,mean})

Entspricht der über einen betrachteten Zeitraum gemittelten, mittleren Eintauchtiefe.

Der "wasserdichte Gebäudebaustoff" ist erfindungsgemäß Beton. Die Prüfkammer (11) besteht aus mindestens vier Wandteilen (11a, 11b, 11c, 11d) und einer Grundplatte (12a), die dichtend miteinander verbunden sind. Die Prüfkammer (11) wird bevorzugt waagerecht eingesetzt, so dass die Höhe der vier Wandteile (11a, 11b, 11c, 11d) bevorzugt ein deutlich geringeres Maß aufweist als die Länge und die Breite der Grundplatte (12a).

Die vorliegende Erfindung weist die Vorteile auf, dass die Prüfkammer (11) eine reale Einbausimulation simulieren kann, indem sie aus einem üblichen Gebäudebaustoff, erfindungsgemäß Beton, gefertigt wird. Damit kann bereits beim eingesetzten Material sowie auch bei den Wandstärken und sonstigen Dimensionen ein Standard festgelegt werden, um für die beabsichtigten Simulationen gleiche Voraussetzungen zu schaffen. Die tatsächlichen Dimensionen werden nachstehend noch näher ausgeführt, bewegen sich aber in einem Bereich, in dem die Vorrichtung (1) praktisch noch gut handhabbar ist. Die Vorrichtung (1) kann grundsätzlich an einem beliebigen Platz aufgestellt werden, um die beabsichtigten Simulationen durchzuführen.

Die Vorrichtung (1) umfasst ferner eine Deckelplatte (12b), die die Prüfkammer (11) an ihrem zweiten Ende wasserdicht abschließt.

Dies kann sicherstellen, dass im Inneren der Prüfkammer (11) konstantere Bedingungen herrschen, z.B. keine Austrocknung stattfindet oder durch Regen zusätzliche Feuchtigkeit eingebracht wird. Zudem kann die Deckelplatte (12b) die erfindungsgemäße Vorrichtung (1) in eine Druckkammer verwandeln. Ebenso lassen sich die im Erdreich zu erwartenden Temperaturen derart einstellen, dass sich Diffusionsgefälle ergeben, wie diese in einem realen, beheizten Keller bei Belastung durch drückendes Wasser und aufstauendes Sickerwasser auftreten.

Der Begriff "zweites Ende" bezeichnet im Sinne der vorliegenden Erfindung und im Gegensatz zum ersten Ende, das obere Ende der Prüfkammer (11).

Durch die wannenförmige Ausgestaltung ist, insbesondere bei größeren Prüfkammern (11), die gute Zugänglichkeit einerseits zu den Wandteilen (11a, 11b, 11c, 11d) und andererseits zu der Grundplatte (12a) gewährleistet, der ein ebenes Gebäudeteil simulieren sollen.

Bei der Vorrichtung (1) sind jedes der vier Wandteile (11a, 11b 11c, 11d), die Grundplatte (12a) und die Deckelplatte (12b) bevorzugt dazu ausgelegt, eine ebene Gebäudewand oder einen ebenen Gebäudeboden zu simulieren.

Mit dieser Ausgestaltung ist es möglich, jede denkbare Einbausituation eines Dämmmaterials zu simulieren, insbesondere den horizontalen Einbau sowohl auf einer

Gebäude-Bodenplatte als auch darunter. Ferner ist es möglich, auch einen vertikalen Einbau an einer senkrechten Gebäudewand zu simulieren.

Eine nicht erfingungsgemäße Ausführungsform sieht vor, dass die Prüfkammer (11) eine Höhe zwischen 0,05 m und 4 m, insbesondere zwischen 0,3 m und 2 m, aufweist, wenn die Prüfkammer (11) an ihrem zweiten Ende offen bleibt. Die Höhe zwischen 0,05 m und 4 m ermöglicht eine praxisnahe aber gleichzeitig gut handhabbare Einbausituation, so dass für die Simulation keine umfangreichen technischen Voraussetzungen geschaffen werden müssen.

Diese Weiterbildung kann erfindungsgemäß dahingehend ergänzt werden, dass die Vorrichtung ferner einen Flüssigkeitsbehälter (13) umfasst, der mit dem Inneren der Vorrichtung (1) in fluiddynamischer Verbindung steht. Hierdurch kann einerseits je nach Bedarf Flüssigkeit, insbesondere Wasser, in das Innere geleitet werden, um einen bestimmten Feuchtegrad aufrecht zu erhalten.

Der Flüssigkeitsbehälter (13) kann einerseits beispielsweise direkt auf die Deckelplatte (12b) aufgesetzt sein. Andererseits kann der Flüssigkeitsbehälter (13) über eine Fluidleitung (14) (starr oder flexibel) mit der die Deckelplatte (12b) verbunden sein.

Eine zu der ersten Ausführungsform alternative, erfindungsgemäß verwendete zweite Ausführungsform der Vorrichtung (1) sieht vor, dass die Prüfkammer (11) eine Höhe zwischen 0,05 m und 2 m aufweist, wenn die Prüfkammer (11) an ihrem zweiten Ende mit der Deckelplatte (12b) verschlossen ist. Hierdurch kann ein hydrostatischer Druck in der erfindungsgemäßen Vorrichtung (1) aufgebaut werden, um beispielsweise die beabsichtigten Simulationen variieren zu können. Durch einen erhöhten hydrostatischen Druck können beispielsweise in der nur 0,05 m und 2 m hohen Vorrichtung (1) Bedingungen eingestellt werden, welche einer Vorrichtung (1) gemäß der ersten Ausführungsform mit größeren Dimensionen entsprechen. Durch Temperierung des zugeführten Fluids lassen sich zudem Temperaturen einstellen, wie diese im zu simulierenden Erdreich auftreten. Darüber hinaus können bestimmte Simulationen zeitlich gerafft werden, um einen auf längere Dauer ausgelegten Versuch in kürzerer Zeit durchführen zu können.

Ein weiterer Aspekt des erfindungsgemäßen Verfahrens ist die Verwendung eines Versuchsaufbaus (100) zur Simulation realer Einbaubedingungen von erdberührten und/oder spritzwasserbelasteten Gebäudebauteilen gelöst, welcher umfasst
- zumindest eine Vorrichtung (1), wie sie vorstehend beschrieben wurde,
- eine Dämmstoffschicht (3), die auf zumindest eines der vier Wandteile (11a, 11b, 11c, 11d), der Grundplatte (12a) und der Deckelplatte (12b) der zumindest einen Vorrichtung (1) über die gesamte Fläche aufgebracht ist,
- einen Freiraum (111) zwischen der Dämmstoffschicht (3) und dem gegenüberliegenden Wandteil (11a, 11b, 11c, 11d), der Grundplatte (12a) oder der Deckelplatte (12b),
wobei der Freiraum (111) zumindest teilweise mit Wasser oder mit einer Substratschüttung (5) enthaltend Wasser gefüllt ist.

Die Dämmstoffschicht (3) umfasst erfindungsgemäß das Dämmstoffmaterial, das der Simulation, bzw. der Untersuchung unterzogen werden soll. Zur Simulation der realen Einbaubedingung wird die Dämmstoffschicht (3) auf eines der vier Wandteile (11a, 11b, 11c, 11d), der Grundplatte (12a) oder der Deckelplatte (12b) über die gesamte Fläche dieses Teils aufgebracht. Das Aufbringen geschieht in der Regel durch Verkleben, kann sich aber nach der Zielrichtung der Simulation bzw. Untersuchung richten. So könnte beispielsweise auch der Einfluss einer unsachgemäßen Verklebung auf die Dämmstoffschicht (3) untersucht werden, ebenso der Einfluss einer Verklebung an den Stirnseiten der Dämmstoffschicht.

Der Freiraum (111) dient dazu, das Wasser und/oder die Substratschüttung (5) aufzunehmen, welche die realen Bedingungen simulieren sollen, beispielsweise drückendes und lang anhaltendes Grundwasser.

Mit "Substratschüttung" wird eine für die Simulation verwendete Schüttung bezeichnet, welche neben Erde im klassischen Sinne auch Sand, Schotter und dergleichen sowie Mischungen und Schüttungen davon enthalten kann. Die Verwendung von gewaschenem Kies soll eine Verfrachtung von Feinanteil und ggf. Probleme durch verstopfte Abflüsse vermeiden.

Der Versuchsaufbau (100) ermöglicht die Simulation des realen Einbaus unter definierten Bedingungen, so dass unterschiedliche Dämmstoffe unter gleichen Voraussetzungen untersucht werden können. Durch die als Prüfkammer (11) ausgebildete Vorrichtung (1) können zudem verschiedene Einbauszenarien simuliert werden, neben drückendem und lang anhaltendem Grundwasser auch deutlich trockenere Umstände oder schwankende Grundwasserstände sowie schwankende Temperaturen des Erdreiches.

In einer Weiterbildung umfasst der Versuchsaufbau (100) ferner zumindest eine Einrichtung zur Zufuhr von Wasser zu der Substratschüttung (5). Auf diese Weise kann beispielsweise ein gleichbleibender Wassergehalt sichergestellt werden.

Darüber hinaus ist der Versuchsaufbau (100) dahingehend ausgebildet, dass durch Aufsetzen der Deckelplatte (12b) der Vorrichtung (1) und Verschließen der Versuchsaufbau (100) als Druckkammer aufgeführt ist. Wie vorstehend schon erwähnt, können damit beispielsweise in kürzerer Zeit Vorgänge simuliert werden, die unter Realbedingungen länger andauern würden.

Da neben dem Wassergehalt in der Substratschüttung (5) auch die herrschenden Temperaturen für eine Simulation von Interesse sein können, hat es sich als vorteilhaft herausgestellt, wenn der Versuchsaufbau (100) ferner umfasst
- eine erste Temperiereinheit, welche zumindest mit der von Wasser umgebenen Substratschüttung (5) in Wirkverbindung steht,
   und/oder
- eine zweite Temperiereinheit, welche mit zumindest einem der vier Wandteile (11a, 11b, 11c, 11d), der Grundplatte (12a) und der Deckelplatte (12b), worauf die Dämmstoffschicht (3) aufgebracht ist, in Wirkverbindung steht.

Mit der ersten Temperiereinheit kann das Wasser und/oder die Wasser enthaltende Substratschüttung (5) temperiert werden, sowohl gekühlt wie auch erwärmt. Auf diese Weise kann zum Beispiel eine jahreszeitliche Änderung der Bodentemperatur simuliert werden.

Die zweite Temperiereinheit hingegen steht mit dem Teil der Vorrichtung (1) in Wirkverbindung, welche einen Kellerboden oder eine Kellerwand simuliert. Bei Nutzung eines realen Kellerraums eines Gebäudes, beispielsweise als Wohn- oder Hobbyraum, können durch das Heizen des Kellerraums deutliche Temperaturgradienten zwischen dem Gebäudeinneren und dem umgebenden Erdreich, insbesondere am Boden, auftreten. Diese lassen sich mit der zweiten Temperiereinheit simulieren.

Wenn in der Beschreibung der Vorrichtung (1) und/oder des Versuchsaufbaus (100) Verfahrensmerkmale genannt werden, so beziehen sich diese insbesondere auf das erfindungsgemäße Verfahren. Ebenso beziehen sich gegenständliche Merkmale, die in der Beschreibung des erfindungsgemäßen Verfahrens angeführt werden, auf die Vorrichtung (1) und/oder das Versuchsaufbaus (100).

Mit dem erfindungsgemäßen Verfahren ist es möglich, in reproduzierbarer Weise eine Dämmstoffschicht (3) unter Simulation realer Einbaubedingungen zu untersuchen. Dabei können die Parameter innerhalb einer Simulation oder zwischen verschiedenen Simulationen definiert eingestellt werden.

Erfindungsgemäß umfasst das Verfahren ferner einen Schritt c1) Aufsetzen der Deckelplatte (12b) der Vorrichtung (1) und Verschließen des Versuchsaufbaus (100), wodurch eine Druckkammer erhalten wird. Dieser Schritt berücksichtigt die vorstehend beschriebene zweite alternative Ausführungsform der erfindungsgemäßen Vorrichtung (1), bei welcher durch einen erhöhten hydrostatischen Druck beispielsweise in bestimmte Simulationen zeitlich gerafft werden können, um einen auf längere Dauer ausgelegten Versuch in kürzerer Zeit durchführen zu können. Ferner kann ein Flüssigkeitsbehälter (13) mit dem Inneren der Vorrichtung (1) in fluiddynamische Verbindung gesetzt werden. Wie vorstehend schon erwähnt, können damit beispielsweise in kürzerer Zeit Vorgänge simuliert werden, die unter Realbedingungen länger andauern würden.

Eine andere Weiterbildung sieht vor, dass nach Schritt c) zumindest die Substratschüttung (5) temperiert wird. Hierdurch können in vorteilhafter Weise die herrschenden Temperaturen für eine Simulation einzubeziehen.

Schließlich kann das erfindungsgemäße Verfahren so weitergebildet sein, dass bei einem Versuchsaufbau (100), wie er vorstehend beschrieben wurde, sowohl zumindest der Wandteil (11a, 11b, 11c, 11d), die Grundplatte (12a) oder die Deckelplatte (12b), worauf die Dämmstoffschicht (3) aufgebracht ist, als auch die Substratschüttung (5) temperiert werden, um ein reales Diffusionsgefälle reproduzierbar zu definieren. Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren.

Es zeigen:
- Fig. 1: eine schematische Explosionsdarstellung einer wannenförmig ausgestalteten Vorrichtung 1
- Fig. 2: eine schematische Darstellung einer zu Fig. 1 leicht abgewandelten Ausführungsform in geschlossenem Zustand, ,
- Fig. 3: eine schematische Darstellung eines Versuchsaufbaus 100 nach einer speziellen Ausführungsform und
- Fig. 4: eine schematische Explosionsdarstellung des in Fig. 3 gezeigten Versuchsaufbaus 100.

In den Figuren werden gleiche Teile mit den gleichen Bezugszeichen versehen. Jedoch werden aus Gründen der Übersichtlichkeit nicht alle Bezugszeichen in allen Figuren angegeben.

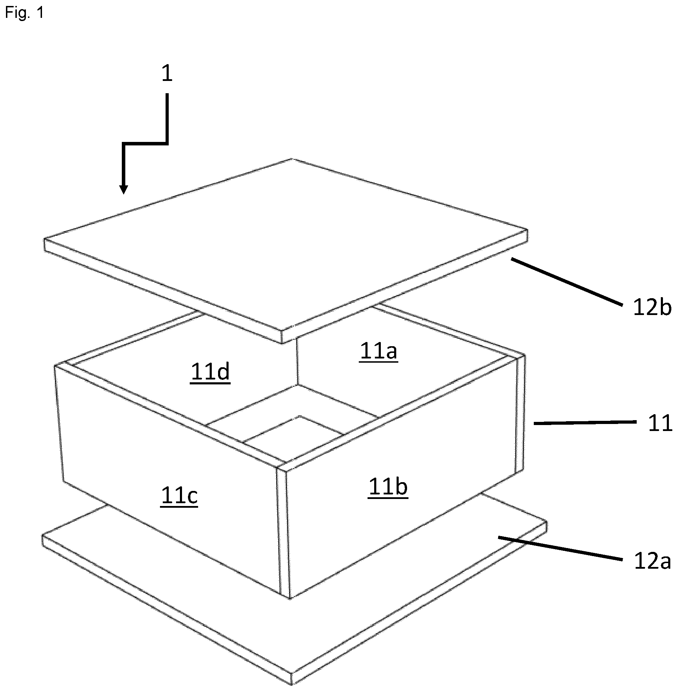

Figur 1 zeigt als schematische Explosionsdarstellung einer wannenförmig ausgestalteten Prüfkammer 11 einer Vorrichtung 1, die mit einer Grundplatte 12a und einer Deckelplatte 12b ausgebildet ist. Diese Darstellung der offenen, leeren Vorrichtung macht deutlich, dass auf den Boden der Grundplatte 12a sowie unter die Deckelplatte 12b in sehr einfach Weise eine Dämmstoffschicht 3 aufgebracht werden kann, da beide Flächen gut zugänglich sind.

In den baurechtlichen Vorschriften wird eine vollflächige Verklebung der Dämmstoffschicht 3 gefordert. Inwieweit bei den handelsüblichen Dämmstoffplatten und dem Anbringen mit einem Kleber, der gewöhnlich mit einem Zahnspachtel aufgebracht wird, in der Praxis tatsächlich eine Vollflächigkeit erhalten wird, ist unsicher. Neuere Vorschriften fordern mittlerweile, dass der Kleber lediglich vollflächig auf der Wand und der Dämmplatte aufzubringen ist (was die Voraussetzung dafür ist, eine vollflächige Verklebung zu erreichen). Einer der möglichen Versuche, der mit diesem Aufbau durchgeführt werden soll, kann genau diese Frage beantworten, ob eine vollflächige Verklebung tatsächlich notwendig ist oder nicht. Alternative Anbringungsmöglichkeiten können in der Folge ebenfalls untersucht werden.

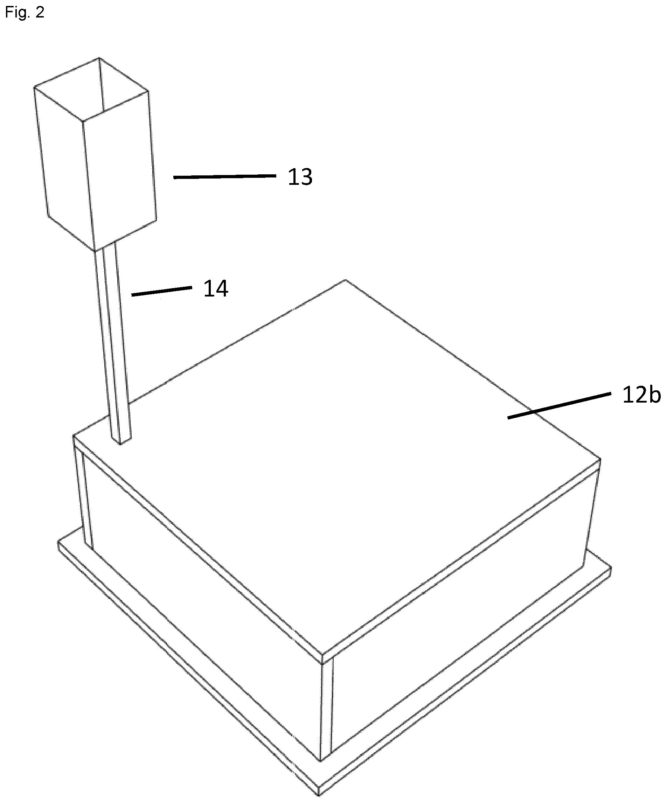

Figur 2 zeigt schematisch eine zu Fig. 1 leicht abgewandelte Ausführungsform in geschlossenem Zustand, bei welcher ein Flüssigkeitsbehälter 13 aufgesetzt und mit einer Fluidleitung 14 mit dem Inneren der Vorrichtung 1 in Verbindung gesetzt ist.

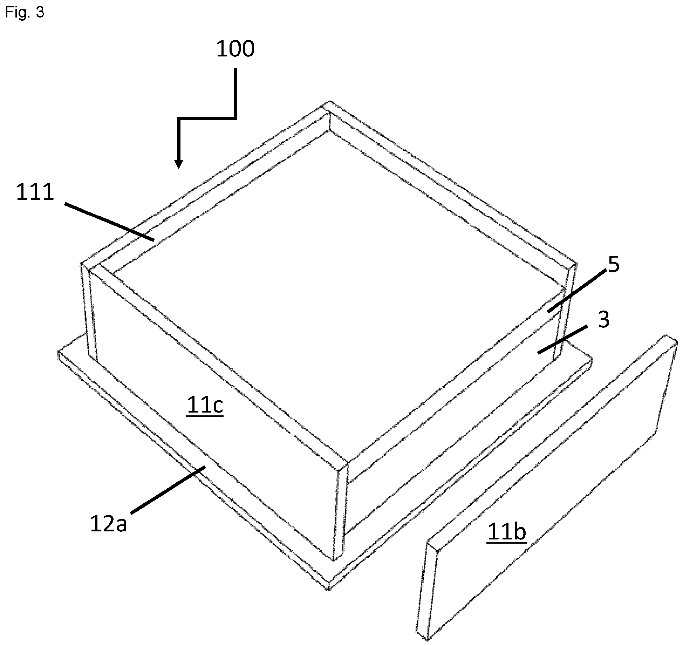

In Figur 3 zeigt grundsätzlich die in den Figuren 1 und 2 dargestellte Vorrichtung 1, die hier nun schematisch als Versuchsaufbau 100 nach einer speziellen Ausführungsform ausgeführt ist. Die Vorrichtung 1 wird dazu mit einer Dämmstoffschicht 3 und einer Substratschüttung 5 versehen. Nicht dargestellt ist die Möglichkeit, auch hier einen Flüssigkeitsbehälter 13 mit einer Fluidleitung 14 aufzusetzen. Der Wandteil 11b ist nur zur besseren Darstellbarkeit entfernt gezeigt, bei vollständigem Aufbau ist dieser zusammen mit den Wandteilen 11a, 11c und 11d geschlossen.

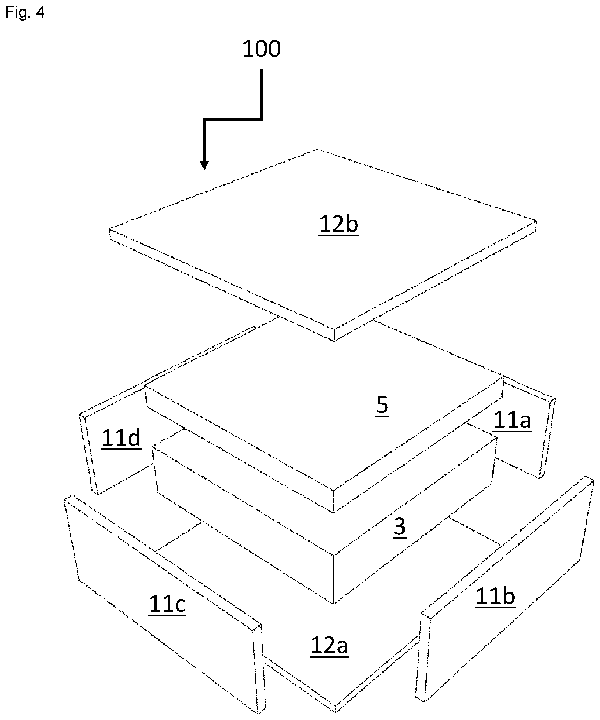

Schließlich zeigt Figur 4 eine schematische Explosionsdarstellung des in Figur 3 gezeigten Versuchsaufbaus 100. Aus dieser Darstellung wird der schichtartige Aufbau auf der Grundplatte 12a mit einer Dämmstoffschicht 3 und der Substratschüttung 5 deutlich.

### Bezugszeichen

- 1: Vorrichtung
- 3: Dämmstoffschicht
- 5: Substratschüttung
- 11: Prüfkammer
- 11a, 11b, 11c, 11d: Wandteile
- 12a: Grundplatte
- 12b: Deckelplatte
- 13: Flüssigkeitsbehälter
- 14: Fluidleitung
- 100: Versuchsaufbau
- 111: Freiraum

## Patentansprüche

1. Verfahren zur Simulation realer Einbaubedingungen von erdberührten und/oder durch drückendes Wasser und aufstauendes Sickerwasser belasteten Gebäudebauteilen, **gekennzeichnet durch** die Schritte
a) Bereitstellen zumindest einer Vorrichtung (1) zur Simulation realer Einbaubedingungen von erdberührten und/oder durch drückendes Wasser und aufstauendes Sickerwasser belasteten Gebäudebauteilen, umfassend
- eine Prüfkammer (11) mit mindestens vier Wandteilen (11a, 11b, 11c, 11d) und einer Grundplatte (12a), die die Prüfkammer (11) an ihrem ersten Ende wasserdicht abschließt,
wobei die Prüfkammer (11) aus einem wasserdichten Gebäudebaustoff hergestellt ist,
wobei der wasserdichte Gebäudebaustoff Beton ist,
und wobei die Vorrichtung (1) ferner eine Deckelplatte (12b) umfasst, die die Prüfkammer (11) an ihrem zweiten Ende wasserdicht abschließt,
und wobei die Prüfkammer (11) eine Höhe zwischen 0,05 m und 2 m aufweist, wenn die Prüfkammer (11) an ihrem zweiten Ende mit der Deckelplatte (12b) verschlossen ist,
b) Aufbringen einer Dämmstoffschicht (3) auf zumindest eines der vier Wandteile (11a, 11b, 11c, 11d), der Grundplatte (12a) und der Deckelplatte (12b), der zumindest einen Vorrichtung (1), und
c) Einbringen von Wasser oder einer von Wasser umgebenen Substratschüttung (5) in den Freiraum (111) zwischen der Dämmstoffschicht (3) und dem gegenüberliegenden Wandteil (11a, 11b, 11c 11d, 13a, 13b), der Grundplatte (12a) oder der Deckelplatte (12b),
wodurch ein Versuchsaufbau (100) zur Simulation realer Einbaubedingungen von erdberührten und/oder durch drückendes Wasser und aufstauendes Sickerwasser belasteten Gebäudebauteilen erhalten wird, umfassend
- zumindest eine Vorrichtung (1),
- die Dämmstoffschicht (3), die auf zumindest einem der vier Wandteile (11a, 11b, 11c, 11d), der Grundplatte (12a) und der Deckelplatte (12b) der zumindest einen Vorrichtung (1) über die gesamte Fläche aufgebracht ist,
- den Freiraum (111) zwischen der Dämmstoffschicht (3) und dem gegenüberliegenden Wandteil (11a, 11b, 11c, 11d), der Grundplatte (12a) oder der Deckelplatte (12b),
wobei der Freiraum (111) zumindest teilweise mit Wasser oder mit einer von Wasser umgebenen Substratschüttung (5) gefüllt ist,
und wobei durch Aufsetzen der Deckelplatte (12b) der Vorrichtung (1) und Verschließen der Versuchsaufbau (100) als Druckkammer ausgeführt ist,
d) Begutachten des Zustandes der Dämmstoffschicht (3) in zeitlichen Intervallen, wobei das Verfahren ferner einen Schritt c1) umfasst, Aufsetzen der Deckelplatte (12b) der Vorrichtung (1) und Verschließen des Versuchsaufbaus (100), wodurch eine Druckkammer erhalten wird.

2. Verfahren nach Anspruch 1, wobei der Versuchsaufbau (100) ferner zumindest eine Einrichtung zur Zufuhr von Wasser zu der Substratschüttung (5) umfasst.

3. Verfahren nach Anspruch 1 oder 2, wobei der Versuchsaufbau (100) ferner
- eine erste Temperiereinheit, welche zumindest mit der von Wasser umgebenen Substratschüttung (5) in Wirkverbindung steht,
und/oder
- eine zweite Temperiereinheit, welche mit zumindest einem der vier Wandteile (11a, 11b, 11c, 11d), der Grundplatte (12a) und der Deckelplatte (12b), worauf die Dämmstoffschicht (3) aufgebracht ist, in Wirkverbindung steht,
umfasst.

4. Verfahren nach einem der Ansprüche 1 bis 3, wobei ein Flüssigkeitsbehälter (13), der mit dem Inneren der Vorrichtung (1) in fluiddynamische Verbindung gesetzt wird.

5. Verfahren nach einem der Ansprüche 1 bis 4, wobei nach Schritt c) zumindest die Substratschüttung (5) temperiert wird.

6. Verfahren nach einem der Ansprüche 1 bis 5, wobei bei einem Versuchsaufbau (100) sowohl zumindest der Wandteil (11a, 11b, 11c, 11d), die Grundplatte (12a) oder die Deckelplatte (12b), worauf die Dämmstoffschicht (3) aufgebracht ist, als auch die Substratschüttung (5) temperiert werden, um ein reales Diffusionsgefälle reproduzierbar zu definieren.

## Claims

1. A process for the simulation of real installation conditions of building components in contact with soil and/or subjected to pressing water and accumulating seepage water, **characterized by** the steps of
a) providing at least one device (1) for the simulation of real installation conditions of building components in contact with soil and/or subjected to pressing water and accumulating seepage water, comprising
- a test chamber (11) with at least four wall parts (11a, 11b, 11c, 11d) and a base plate (12a), which seals the test chamber (11) at its first end in a watertight manner, wherein the test chamber (11) is made of a watertight building material,
wherein the watertight building material is concrete and wherein the device (1) further comprises a cover plate (12b), which seals the test chamber (11) at its second end in a watertight manner, and
wherein the test chamber (11) has a height between 0.05 m and 2 m, when the test chamber (11) is closed at its second end with the cover plate (12b),
b) applying an insulating layer (3) onto at least one of the four wall sections (11a, 11b, 11c, 11d), the base plate (12a) and the cover plate (12b) of the at least one device (1), and
c) introducing water or a substrate filling (5) surrounded by water into the free space (111) between the insulation layer (3) and the opposite wall section (11a, 11b, 11c 11d, 13a, 13b), the base plate (12a) or the cover plate (12b),
whereby an experimental set-up (100) for the simulation of real installation conditions of building components in contact with soil and/or subjected to pressing water and accumulating seepage water, comprising
- at least one device (1),
- the insulation layer (3), which is applied over the entire surface to at least one of the four wall sections (11a, 11b, 11c, 11d), the base plate (12a) and the cover plate (12b) of the at least one device (1),
- the free space (111) between the insulation layer (3) and the opposite part of the wall section (11a, 11b, 11c, 11d), the base plate (12a) or the cover plate (12b),
wherein the free space (111) is at least partially filled with water or with a substrate filling (5) surrounded by water, and wherein, by placing the cover plate (12b) of the device (1) and closing, the experimental set-up (100) is configured as a pressure chamber,
d) assessing the condition of the insulation layer (3) at time intervals,
wherein the process further comprises a step c1) of placing the cover plate (12b) of the device (1) and closing of the experimental set-up (100), whereby a pressure chamber is obtained.

2. The process according to claim 1, wherein the experimental set-up (100) further comprises at least one device for the supply of water to the substrate filling (5).

3. The process according to claim 1 or 2, wherein the experimental set-up (100) further comprises
- a first temperature-control unit, which is operatively connected at least with the substrate filling (5) surrounded by water,
and/or
- a second temperature-control unit, which is operatively connected with at least one of the four wall sections (11a, 11b, 11c, 11d), the base plate (12a) and the cover plate (12b), whereto the insulation layer (3) is applied.

4. The process according to any one of claims 1 to 3, wherein a liquid container (13) is placed in fluid-dynamic connection with the interior of the device (1).

5. The process according to any one of claims 1 to 4, wherein after step c) at least the substrate filling (5) is tempered.

6. The process according to any one of claims 1 to 5, wherein in an experimental setup (100), both at least the wall section (11a, 11b, 11c, 11d), the base plate (12a) or the cover plate (12b), whereto the insulation layer (3) is applied, and the substrate filling (5) are tempered in order to reproducibly define a real diffusion gradient.

## Revendications

1. Procédé de simulation de conditions réelles d'installation des composants du bâtiment en contact avec le sol et/ou exposés aux éclaboussures d'eau et/ou soumis à la pression de l'eau et aux eaux de percolation accumulée, **caractérisé par** les étapes:
a) fournir au moins un dispositif (1) pour la simulation de conditions réelles d'installation des composants du bâtiment en contact avec le sol et/ou exposés aux éclaboussures d'eau et/ou soumis à la pression de l'eau et aux eaux de percolation accumulées, comprenant
- une chambre d'essai (11) comportant au moins quatre parties de paroi (11a, 11b, 11c, 11d) et une plaque de base (12a), qui ferme de manière étanche à l'eau la chambre d'essai (11) à sa première extrémité,
dans lequel la chambre d'essai (11) est réalisée en un matériau de construction étanche à l'eau,
dans lequel le matériau de construction étanche à l'eau est du béton,
et dans lequel le dispositif (1) comprend en outre une plaque de couverture (12b), qui ferme la chambre d'essai (11) de manière étanche à l'eau à sa seconde extrémité, et dans lequel la chambre d'essai (11) présente une hauteur comprise entre 0,05 m et 2 m, lorsqu'elle la chambre d'essai est fermée à sa seconde extrémité par la plaque de couverture (12b),
b) appliquer une couche isolante (3) sur au moins l'une des quatre parties de paroi (11a, 11b, 11c, 11d), de la plaque de base (12a) et de la plaque de couverture (12b), du au moins un dispositif (1), et
c) introduire de l'eau ou d'un remplissage de substrat (5) entouré d'eau dans l'espace libre (111) entre la couche isolante (3) et la partie de paroi opposée (11a, 11b, 11c, 11d, 13a, 13b), la plaque de base (12a) ou la plaque de couverture (12b),
de manière à obtenir un dispositif expérimental (100) pour la simulation de conditions réelles d'installation des composants du bâtiment en contact avec le sol et/ou exposés aux éclaboussures d'eau et/ou soumis à la pression de l'eau et aux eaux de percolation accumulées, comprenant
- au moins un dispositif (1),
- la couche isolante (3) appliquée sur toute la surface d'au moins l'une des quatre parties de paroi (11a, 11b, 11c, 11d), de la plaque de base (12a) ou de la plaque de couverture (12b), du au moins un dispositif (1),
- l'espace libre (111) entre la couche isolante (3) et la partie de paroi opposée (11a, 11b, 11c, 11d), la plaque de base (12a) ou la plaque de couverture (12b),
dans lequel l'espace libre (111) est au moins partiellement rempli d'eau ou d'un remplissage de substrat (5) entouré d'eau,
et dans lequel, par la mise en place de la plaque de couverture (12b) du dispositif (1) et la fermeture, le dispositif expérimental (100) est configuré comme une chambre de pression,
d) évaluer l'état de la couche isolante (3) à des intervalles de temps,
dans lequel le procédé comprenant en outre une étape c1): mettre en place la plaque de couverture (12b) du dispositif (1) et fermer le dispositif expérimental (100), de manière à obtenir une chambre de pression.

2. Procédé selon la revendication 1, dans lequel le dispositif expérimental (100) comprend en outre au moins un dispositif d'alimentation en eau du remplissage de substrat (5).

3. Procédé selon la revendication 1 ou 2, dans lequel le dispositif expérimental (100) comprend en outre
- une première unité de régulation de température, laquelle est en liaison fonctionnelle avec le remplissage de substrat (5) entouré d'eau,
et/ou
- une seconde unité de régulation de température, laquelle est en liaison fonctionnelle avec au moins l'une des quatre parties de paroi (11a, 11b, 11c, 11d), la plaque de base (12a) et la plaque de couverture (12b), sur laquelle la couche isolante (3) est appliquée.

4. Procédé selon l'une quelconque des revendications 1 à 3, dans lequel un récipient de liquide (13) est mis en connexion fluidodynamique avec l'intérieur du dispositif (1).

5. Procédé selon l'une quelconque des revendications 1 à 4, dans lequel, après l'étape c), au moins le remplissage de substrat (5) est tempéré.

6. Procédé selon l'une quelconque des revendications 1 à 5, dans lequel, dans un dispositif expérimental (100), et au moins la partie de paroi (11a, 11b, 11c, 11d), la plaque de base (12a) ou la plaque de couverture (12b), sur laquelle la couche isolante (3) est appliquée, et le remplissage de substrat (5) sont tempérés afin de définir de manière reproductible un gradient de diffusion réel.
